(19) Europäisches Patentamt
European Patent Office
Office européen des brevets

(11) **EP 4 674 830 A1**

(12) **EUROPEAN PATENT APPLICATION**
published in accordance with Art. 153(4) EPC

(43) Date of publication:
07.01.2026 Bulletin 2026/02

(21) Application number: 24763880.2

(22) Date of filing: 27.02.2024

(51) International Patent Classification (IPC):
$C07C\ 1/12\ ^{(2006.01)}$          $B01J\ 23/83\ ^{(2006.01)}$
$C07B\ 61/00\ ^{(2006.01)}$          $C07C\ 9/04\ ^{(2006.01)}$
$C25B\ 3/03\ ^{(2021.01)}$          $C25B\ 9/00\ ^{(2021.01)}$

(52) Cooperative Patent Classification (CPC):
B01J 23/83; C07B 61/00; C07C 1/12; C07C 9/04;
C25B 3/03; C25B 9/00

(86) International application number:
PCT/JP2024/006956

(87) International publication number:
WO 2024/181400 (06.09.2024 Gazette 2024/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.02.2023 JP 2023030199

(71) Applicant: Mitsui Kinzoku Company, Limited
Tokyo (JP)

(72) Inventors:
• SEKINE, Yasushi
  Tokyo 169-8555 (JP)
• YAMANO, Ryota
  Tokyo 169-8555 (JP)
• MOGI, Satoshi
  Ageo-shi, Saitama 362-0021 (JP)
• NAKAHARA, Yunosuke
  Ageo-shi, Saitama 362-0021 (JP)

(74) Representative: Novagraaf Technologies
Bâtiment O2
2, rue Sarah Bernhardt
CS90017
92665 Asnières-sur-Seine Cedex (FR)

(54) **METHOD FOR PRODUCING METHANE FROM MATERIAL GAS CONTAINING CARBON DIOXIDE GAS AND HYDROGEN GAS, AND CATALYST FOR METHANATION OF CARBON DIOXIDE**

(57) An object of the present invention is to provide a method for producing methane from a feedstock gas containing carbon dioxide gas and hydrogen gas, the method exhibiting an improved methane production rate even when a catalyst for carbon dioxide methanation is used in a low-temperature environment, and a catalyst for carbon dioxide methanation, the catalyst exhibiting an improved methane production rate even when the catalyst is used in a low-temperature environment. The present invention provides a method for producing methane from a feedstock gas containing carbon dioxide gas and hydrogen gas, including the following steps of: (a) preparing a reactor (2) including a reaction chamber (20), a pair of electrodes (3, 4) provided in the reaction chamber (20), and a catalyst (5) provided between the pair of electrodes (3, 4); (b) supplying the feedstock gas containing carbon dioxide gas and hydrogen gas (G1) to the reaction chamber (20) to bring the feedstock gas (G1) into contact with the catalyst (5); and (c) applying a voltage between the pair of electrodes (3, 4) in an environment with a temperature of 150°C or less so that a direct current of 1 mA or more and 10 mA or less flows through the catalyst (5), wherein the pair of electrodes (3, 4) are both in contact with the catalyst (5), wherein the catalyst (5) includes a carrier and a catalytically active component supported on the carrier, wherein the carrier contains cerium oxide, and wherein the catalytically active component contains nickel element. The present invention also provides a catalyst for carbon dioxide methanation (5), including a carrier and a catalytically active component supported on the carrier, wherein the carrier contains cerium oxide, and wherein the catalytically active component contains nickel element.

EP 4 674 830 A1

**Figure 1**

## Description

### Technical Field

The present invention relates to a method for producing methane from a feedstock gas containing carbon dioxide gas and hydrogen gas and a catalyst for carbon dioxide methanation.

### Background Art

In recent years, there is a growing trend towards the reduction of emissions of greenhouse gas such as carbon dioxide, on a global scale. Thus, as one of the solutions for the reduction of carbon dioxide, a catalyst that accelerates the methanation reaction of carbon dioxide ($CO_2 + 4H_2 \rightarrow CH_4 + 2H_2O$) is attracting attention, and various catalysts for carbon dioxide methanation have been developed. For example, Patent Literature 1 describes a catalyst for carbon dioxide methanation, wherein a metal such as Ni is supported on a carrier containing $ZrO_2$, $CeO_2$, $Al_2O_3$-$ZrO_2$, $CeO_2$-$ZrO_2$, $SiO_2$, or the like, and a method for producing methane by bringing a feedstock gas containing carbon dioxide gas and hydrogen gas into contact with the catalyst for carbon dioxide methanation.

### Citation List

Patent Literature

Patent Literature 1: Japanese Patent Laid-Open No. 2018-161617

### Summary Of Invention

Technical Problem

However, in the conventional method, the methane production rate is low when the catalyst for carbon dioxide methanation is used in a low-temperature environment.

Accordingly, an object of the present invention is to provide a method for producing methane from a feedstock gas containing carbon dioxide gas and hydrogen gas, the method exhibiting an improved methane production rate even when a catalyst for carbon dioxide methanation is used in a low-temperature environment. Another object of the present invention is to provide a catalyst for carbon dioxide methanation, the catalyst exhibiting an improved methane production rate even when the catalyst is used in a low-temperature environment.

Solution To Problem

The present invention includes the following inventions.

[1] A method for producing methane from a feedstock gas containing carbon dioxide gas and hydrogen gas, the method including the following steps of:

(a) preparing a reactor including a reaction chamber, a pair of electrodes provided in the reaction chamber, and a catalyst provided between the pair of electrodes;
(b) supplying the feedstock gas containing carbon dioxide gas and hydrogen gas to the reaction chamber to bring the feedstock gas into contact with the catalyst; and
(c) applying a voltage between the pair of electrodes in an environment with a temperature of 150°C or less so that a direct current of 1 mA or more and 10 mA or less flows through the catalyst,

wherein the pair of electrodes are both in contact with the catalyst,
wherein the catalyst includes a carrier and a catalytically active component supported on the carrier,
wherein the carrier contains cerium oxide, and
wherein the catalytically active component contains nickel element.

[2] The method according to [1], wherein step (c) is carried out in an environment with a temperature of 100°C or less.
[3] The method according to [1] or [2], wherein the catalytically active component contains one or more selected from metallic nickel and nickel oxide.
[4] The method according to any one of [1] to [3], wherein step (c) is initiated after initiation of step (b).

[5] The method according to any one of [1] to [4], wherein in step (b), the feedstock gas is continuously supplied to the reaction chamber.

[6] The method according to any one of [1] to [5], wherein in step (c), a voltage is continuously applied between the pair of electrodes so that the direct current of 1 mA or more and 10 mA or less continuously flows through the catalyst.

[7] A catalyst for carbon dioxide methanation, the catalyst including a carrier and a catalytically active component supported on the carrier,

> wherein the carrier contains cerium oxide,
> wherein the catalytically active component contains nickel element, and
> wherein when, in a Raman spectrum obtained by Raman spectroscopy measurement of the catalyst, a peak intensity at a peak top present in a range of $400 \, \text{cm}^{-1}$ to $500 \, \text{cm}^{-1}$ is defined as P1 and a peak intensity at a position of $600 \, \text{cm}^{-1}$ is defined as P2, P2/P1 is 0.15 or more and 0.60 or less.

[8] The catalyst according to [7], wherein a content of nickel element in the catalyst is 0.8% by mass or more and 20% by mass or less.

[9] The catalyst according to [7] or [8], wherein the catalytically active component contains one or more selected from metallic nickel and nickel oxide.

[10] The catalyst according to any one of [7] to [9], wherein a specific surface area of the catalyst is 200 $\text{m}^2/\text{g}$ or less.

Advantageous Effects Of Invention

The present invention provides a method for producing methane from a feedstock gas containing carbon dioxide gas and hydrogen gas, the method exhibiting an improved methane production rate even when a catalyst for carbon dioxide methanation is used in a low-temperature environment. The present invention also provides a catalyst for carbon dioxide methanation, the catalyst exhibiting an improved methane production rate even when the catalyst is used in a low-temperature environment.

In the present invention, the term "environment with a temperature of T°C" means that the temperature of the environment where the catalyst for carbon dioxide methanation is positioned (the ambient temperature around the catalyst for carbon dioxide methanation) is T°C.

In the present invention, the term "low temperature environment" means that the temperature of the environment where the catalyst for carbon dioxide methanation is positioned (the ambient temperature around the catalyst for carbon dioxide methanation) is a low temperature, and the "low temperature" means, for example, a temperature of 150°C or less.

In the present invention, the methane production rate ($CH_4$ production rate) can be determined using the carbon dioxide conversion rate ($CO_2$ conversion rate) and the methane selectivity ($CH_4$ selectivity), based on the following equation.

$$CH_4 \text{ production rate} = CO_2 \text{ conversion rate} \times CH_4 \text{ selectivity}$$

The term "$CO_2$ conversion rate" refers to the total proportion (%) of $CO_2$ converted to CO and $CO_2$ converted to $CH_4$, relative to total $CO_2$, and the term "$CH_4$ selectivity" refers to the proportion (%) of $CO_2$ converted to $CH_4$, relative to the sum of $CO_2$ converted to CO and $CO_2$ converted to $CH_4$. The $CO_2$ conversion rate and the $CH_4$ selectivity can be determined according to the method and conditions described in Examples.

In the present invention, the $CH_4$ production rate is preferably 5% or more, more preferably 10% or more, and the higher the value, the more desirable.

**Brief Description of Drawings**

[Fig.1] Figure 1 shows a schematic view of a methane production apparatus according to an embodiment of the present invention.

[Fig.2] Figure 2 shows the Raman spectra obtained by using the catalyst powders of Examples 1 to 6.

[Fig.3] Figure 3 shows the Raman spectrum obtained by using the catalyst powder of Comparative Example 1.

**Detailed Description of Invention**

<Catalyst>

Hereinafter, an embodiment of the catalyst of the present invention will be described.

The catalyst of the present invention is a catalyst for carbon dioxide methanation that accelerates the methanation reaction ($CO_2 + 4H_2 \rightarrow CH_4 + 2H_2O$) of carbon dioxide. Thus, the catalyst of the present invention can produce methane from a feedstock gas containing carbon dioxide gas and hydrogen gas.

The catalyst of the present invention includes a carrier and a catalytically active component supported on the carrier.

From the viewpoint of improving the ability of the carrier to support the catalytically active component, the carrier is preferably porous.

The form of the carrier is not particularly limited as long as the carrier can support the catalytically active component on the surface thereof. Examples of the form of the carrier include particles and a layer. The particles may be primary particles or secondary particles. Secondary particles are agglomerates formed by the aggregation of primary particles.

The form of the catalytically active component is not particularly limited as long as the catalytically active component can be supported on the surface of the carrier. Examples of the form of the catalytically active component include particles and a layer. The particles may be primary particles or secondary particles. The catalytically active component may be supported on part or the whole of the surface of the carrier.

The carrier contains cerium(IV) oxide (that is, $CeO_2$). From the viewpoint of improving the methane production rate even when the catalyst of the present invention is used in a low-temperature environment, the content of cerium oxide in the carrier is preferably 50% by mass or more, more preferably 65% by mass or more, and still more preferably 75% by mass or more, based on the mass of the carrier. Considering the presence of inevitable impurities, the upper limit may actually be less than 100% by mass, although it is 100% by mass in theory.

The content of cerium oxide in the carrier is determined from the formula: (the mass of Ce element in the carrier in terms of $CeO_2$) / (the mass of the carrier) $\times$ 100. The mass of Ce element in the carrier in terms of $CeO_2$ can be measured by inductively coupled plasma atomic emission spectroscopy.

The carrier may contain one or more other components. Examples of the other components include lanthanum, gadolinium, samarium, praseodymium, yttrium, europium, and zirconium. Each of these metal elements contained in the carrier may be in the form of a metal, an alloy, an oxide, or the like.

The catalytically active component contains nickel element.

The nickel element can exist, for example, in the form of metallic nickel, nickel oxide, or the like. Thus, the catalytically active component can contain one or more selected from metallic nickel and nickel oxide. Examples of nickel oxide include nickel(II) oxide (that is, NiO). The nickel element may exist in two or more forms. From the viewpoint of improving the methane production rate even when the catalyst of the present invention is used in a low-temperature environment, the catalytically active component preferably contains metallic nickel.

The catalyst of the present invention may be either one that has already been subjected to reduction treatment or one that has not yet been subjected to reduction treatment, and is preferably one that has already been subjected to reduction treatment, from the viewpoint of improving the methane production rate even when the catalyst of the present invention used is in a low-temperature environment. Before reduction treatment, the nickel element usually exists in the form of nickel oxide. After reduction treatment, nickel oxide is reduced and thus the nickel element exists in the form of metallic nickel.

From the viewpoint of improving the methane production rate even when the catalyst of the present invention is used in a low-temperature environment, the content of nickel element in the catalyst of the present invention is preferably 0.8% by mass or more and 20% by mass or less, more preferably 1% by mass or more and 15% by mass or less, and still more preferably 5% by mass or more and 10% by mass or less.

The content of nickel element in the catalyst of the present invention can be determined from the formula: (the mass of Ni element in the catalyst of the present invention in terms of metal) / (the mass of the catalyst of the present invention) $\times$ 100. The mass of Ni element in the catalyst of the present invention in terms of metal can be measured by inductively coupled plasma atomic emission spectroscopy.

From the viewpoint of improving the methane production rate even when the catalyst of the present invention is used in a low-temperature environment, the total content of cerium oxide and nickel element in the catalyst of the present invention is preferably 80% by mass or more, more preferably 85% by mass or more, and still more preferably 90% by mass or more, based on the mass of the catalyst of the present invention. Considering the presence of inevitable impurities, the upper limit may actually be less than 100% by mass, although it is 100% by mass in theory.

The total content of cerium oxide and nickel element in the catalyst of the present invention can be determined from the formula: ((the mass of Ce element in the catalyst of the present invention in terms of $CeO_2$) + (the mass of Ni element in the catalyst of the present invention in terms of metal)) / (the mass of the catalyst of the present invention) $\times$ 100. The mass of Ce element in the catalyst of the present invention in terms of $CeO_2$ and the mass of Ni element in the catalyst of the present invention in terms of metal can be measured by inductively coupled plasma atomic emission spectroscopy.

From the viewpoint of improving the methane production rate even when the catalyst of the present invention is used in a low-temperature environment, when, in a Raman spectrum obtained by Raman spectroscopy measurement of the catalyst of the present invention, a peak intensity at a peak top present in a range of 400 $cm^{-1}$ to 500 $cm^{-1}$ is defined as P1 and a peak intensity at a position of 600 $cm^{-1}$ is defined as P2, P2/P1 is preferably 0.15 or more and 0.60 or less, more preferably 0.25 or more and 0.50 or less, and still more preferably 0.30 or more and 0.45 or less. The Raman spectroscopy measurement of the catalyst of the present invention can be conducted according to the method and conditions described in Examples. In the Raman spectrum obtained by the Raman spectroscopy measurement of the catalyst of the present invention, one peak top is present in the range of 400 $cm^{-1}$ to 500 $cm^{-1}$. On the other hand, the peak intensity at the position of 600 $cm^{-1}$ is not necessarily a peak intensity of a peak top. Each of the peak intensities P1 and P2 is determined by taking a peak intensity at a position of 1000 $cm^{-1}$ as a baseline, and subtracting the peak intensity at the position of 1000 $cm^{-1}$ from the measured peak intensity value.

When in an environment with a temperature of 150°C or less, a feedstock gas containing carbon dioxide gas and hydrogen gas comes into contact with the catalyst of the present invention through which a direct current of 1 mA or more and 10 mA or less flows, the methanation reaction ($CO_2 + 4H_2 \rightarrow CH_4 + 2H_2O$) of carbon dioxide progresses by the action of the catalyst of the present invention, so that methane is produced from the feedstock gas. The mechanism thereof is considered as follows.

When in an environment with a temperature of 150°C or less, a direct current of 1 mA or more and 10 mA or less flows through the catalyst of the present invention, the supply of protons ($H^+$) conducted via the OH group present on the $CeO_2$ surface of the catalyst of the present invention is promoted. In particular, the production of methane is promoted on the three-phase interface among the Ni element in the catalytically active component of the catalyst of the present invention, $CeO_2$ in the carrier of the catalyst of the present invention, and $CO_2$ in the feedstock gas. In a general thermal reaction using no electric field, when the Ni element in the catalytically active component exists as metallic nickel, hydrogen is dissociated into H on metallic Ni sites, and CO adsorbed to the surface of metallic nickel and the three-phase interface is hydrogenated, so that methane is produced. In contrast, in the present invention, it is considered that use of an electric field as mentioned above allows protons ($H^+$) conducted via the OH group present on the $CeO_2$ surface in the carrier of the catalyst of the present invention to be added to CO, so that methane is produced, not only when the Ni element in the catalytically active component exists as metallic nickel, but also when the Ni element exists as nickel oxide.

When P2/P1 falls within the aforementioned range, the dissociation of $CO_2$ in the feedstock gas into CO by utilizing the lattice defect of oxygen on the $CeO_2$ surface in the carrier of the catalyst of the present invention is promoted, together with the production of methane by the aforementioned mechanism, so that the methane production rate can be improved even when the catalyst of the present invention is used in a low-temperature environment.

P2/P1 can be adjusted to the aforementioned range by adjusting the composition of the catalyst of the present invention (e.g., adjusting the content of nickel element in the catalyst of the present invention to the aforementioned range), or adjusting the crystallinity of cerium oxide in the carrier of the catalyst of the present invention (e.g., using a carrier containing a cerium oxide nanocrystal as the carrier of the catalyst of the present invention).

As the specific surface area of the catalyst of the present invention is increased, the methane production rate is improved even when the catalyst of the present invention is used in a low-temperature environment. However, when P2/P1 falls within the aforementioned range, the catalyst of the present invention can achieve a sufficient methane production rate in a low-temperature environment, even if the specific surface area of the catalyst of the present invention is small. Thus, the effect of the catalyst of the present invention is significant when the specific surface area of the catalyst of the present invention is small. Specifically, the effect of the catalyst of the present invention is significant when the specific surface area of the catalyst of the present invention is 200 $m^2/g$ or less, more significant when it is 150 $m^2/g$ or less, and still more significant when it is 130 $m^2/g$ or less. It is preferable that the lower limit of the specific surface area of the catalyst of the present invention is, for example, 10 $m^2/g$ or 50 $m^2/g$. Each of these lower limits may be combined with any of the aforementioned upper limits. The aforementioned specific surface area of the catalyst of the present invention is a value before the catalyst is subjected to reduction treatment, and can be measured according to the method and conditions described in Examples.

The catalyst of the present invention can be produced by mixing a material for the carrier (e.g., cerium oxide powder) and a material for the catalytically active component (e.g., a nickel salt such as nickel acetate or nickel nitrate) at a predetermined ratio in an aqueous solution, drying the mixture if necessary, and then calcining the mixture. The drying temperature is, for example, 60°C or more and 200°C or less, and the drying time is, for example, 0.5 hours or more and 24 hours or less. The calcining temperature is, for example, 250°C or more and 600°C or less, and the calcining time is, for example, 1 hour or more and 12 hours or less. Calcining can be carried out, for example, in an air atmosphere.

<Methane producing apparatus>

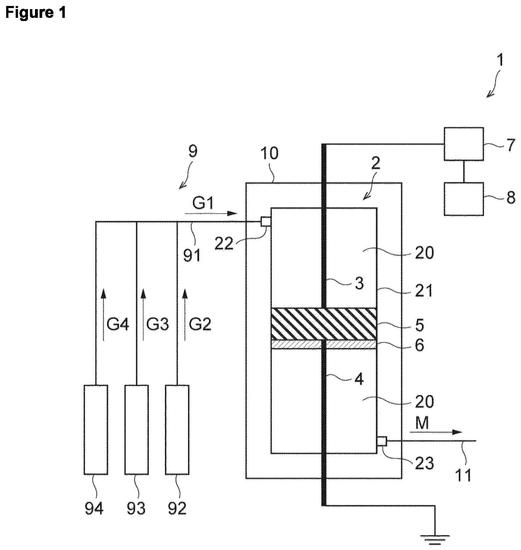

Hereinafter, a methane production apparatus 1 according to an embodiment of the present invention will be described with reference to Figure 1.

As shown in Figure 1, the methane production apparatus 1 includes a reactor 2.

As shown in Figure 1, the reactor 2 includes a reaction chamber 20, a pair of electrodes 3, 4 provided in the reaction chamber 20, and a catalyst 5 provided between the pair of electrodes 3, 4.

As shown in Figure 1, the reactor 2 includes a reactor body 21. The reaction chamber 20 is formed in the reactor body 21. The material of the reactor body 21 is not particularly limited as long as it is chemically inactive in the methanation reaction of carbon dioxide. Examples of the material of the reactor body 21 include quartz and borosilicate glass. The size of the reactor body 21 is not particularly limited. The internal diameter of the reactor body 21 is, for example, 4 mm or more and 100 mm or less. The length of the reactor body 21 is, for example, 150 mm or more and 1000 mm or less.

As shown in Figure 1, the reactor 2 includes a gas inlet port 22 and a gas outlet port 23. The gas inlet port 22 and the gas outlet port 23 are provided on or in the reactor body 21. For example, the gas inlet port 22 is provided on one end side of the reactor body 21, and the gas outlet port 23 is provided on the other end side of the reactor body 21.

As shown in Figure 1, the electrodes 3, 4 are arranged in the reaction chamber 20 facing each other with a predetermined distance. The electrode 3 is the electrode on the voltage applying side and is electrically connected to a voltage application means 7 (described below). The electrode 4 is the electrode on the grounding side and is grounded (earthed).

The materials of the electrodes 3, 4 are not particularly limited as long as they are chemically inactive in the methanation reaction of carbon dioxide and have electrical conductivity sufficient to form an electric field. Examples of the materials of the electrodes 3, 4 include stainless steel and a titanium alloy.

The forms of the electrodes 3, 4 are not particularly limited as long as the electrodes 3, 4 can be in contact with the catalyst 5. Examples of the forms of the electrodes 3, 4 include a rod, a flat plate, and a mesh. Examples of the shape of the flat plate in a plan view include, but are not particularly limited to, a circle and a quadrangle. As shown in Figure 1, each of the electrodes 3, 4 is, for example, in the form of a rod extending in the longitudinal direction of the reactor body 21.

Both the electrodes 3, 4 are in contact with the catalyst 5. Consequently, the plasma discharge via air in the reaction chamber 20 can be prevented from occurring.

As shown in Figure 1, when each of the electrodes 3, 4 is in the form of a rod, the tip part of the rod is in contact with the catalyst 5.

The distance between the electrode 3 and the electrode 4 is not particularly limited as long as both the electrodes 3, 4 can be in contact with the catalyst 5. The distance between the electrode 3 and the electrode 4 is equal to the thickness of the catalyst 5 or smaller than the thickness of the catalyst 5. The thickness of the catalyst 5 is the dimension in the longitudinal direction of the reactor body 21 (the direction in which the feedstock gas flows).

The catalyst 5 is a catalyst for carbon dioxide methanation that accelerates the methanation reaction ($CO_2 + 4H_2$ -> $CH_4 + 2H_2O$) of carbon dioxide. Thus, the catalyst 5 enables the production of methane from the feedstock gas containing carbon dioxide gas and hydrogen gas.

As the catalyst 5, the catalyst of the present invention is used. The description with respect to the catalyst of the present invention is as described above.

The form of the catalyst 5 is not particularly limited as long as the catalyst 5 can be in contact with the electrodes 3, 4. Examples of the form of the catalyst 5 include particles and a layer. The particles may be primary particles or secondary particles. The layer may be formed by aggregation of particles.

As shown in Figure 1, the catalyst 5 is present, for example, as a layer located approximately at the center in the longitudinal direction of the reactor body 21 and extending in a direction approximately perpendicular to the longitudinal direction of the reactor body 21.

The amount of the catalyst 5 can be appropriately adjusted according to the supply amount of the feedstock gas containing carbon dioxide gas and hydrogen gas, and the like.

As shown in Figure 1, the methane production apparatus 1 may include a support means 6 that supports the catalyst 5. As the support means 6, for example, a porous support plate or the like can be used. Examples of the material of the support plate include ceramic.

As shown in Figure 1, the methane production apparatus 1 may include a voltage application means 7 that applies a voltage between the electrodes 3, 4. The voltage application means 7 is, for example, a power source.

As shown in Figure 1, the methane production apparatus 1 may include a voltage control means 8 that controls the voltage applied between the electrodes 3, 4.

The methane production apparatus 1 can apply a voltage between the electrodes 3, 4 by using the voltage application means 7 and optionally the voltage control means 8 so that a direct current of 1 mA or more and 10 mA or less flows through the catalyst 5.

As shown in Figure 1, the methane production apparatus 1 may include a feedstock gas supply means 9.

As shown in Figure 1, the feedstock gas supply means 9 includes a supply pipe 91 that supplies a feedstock gas G1 to the reaction chamber 20, a carbon dioxide gas supply source 92 that supplies carbon dioxide gas G2 to the supply pipe 91, and a hydrogen gas supply source 93 that supplies hydrogen gas G3 to the supply pipe 91.

As shown in Figure 1, one end of the supply pipe 91 is connected to the gas inlet port 22 of the reactor 2.

As the carbon dioxide gas supply source 92, for example, a cylinder containing carbon dioxide gas or a carbon dioxide gas generator can be used.

As the hydrogen gas supply source 93, for example, a cylinder containing hydrogen gas or a hydrogen gas generator can be used.

As shown in Figure 1, the feedstock gas supply means 9 may include a dilution gas supply source 94 that supplies a dilution gas G4 to the supply pipe 91. Examples of the dilution gas G4 include an inert gas such as argon gas. As the dilution gas supply source 94, for example, a cylinder containing dilution gas or a dilution gas generator can be used.

Carbon dioxide gas is supplied from the carbon dioxide gas supply source 92 to the supply pipe 91, hydrogen gas is supplied from the hydrogen gas supply source 93 to the supply pipe 91, and the dilution gas is optionally supplied from the dilution gas supply source 94, so that the feedstock gas G1 containing carbon dioxide gas, hydrogen gas, and optionally the dilution gas is prepared, and the prepared feedstock gas G1 is supplied to the reaction chamber 20 through the gas inlet port 22 of the reactor 2. Upon passing through the catalyst 5, the feedstock gas G1 supplied to the reaction chamber 20 comes into contact with the catalyst 5,.

The feedstock gas supply means 9 may include a pump. The feedstock gas supply means 9 can supply the feedstock gas G1 to the reaction chamber 20, for example, by using the suction force and discharge force of the pump.

As shown in Figure 1, the methane production apparatus 1 may include a temperature control means 10 that controls the temperature of the environment where the catalyst 5 is positioned (the ambient temperature around the catalyst 5, that is, the atmospheric temperature in the reaction chamber 20). The temperature control means 10 has, for example, a heating furnace that surrounds the reactor 2. The heating furnace is, for example, an electric furnace. The heating furnace can increase the ambient temperature around the catalyst 5 (that is, the atmospheric temperature in the reaction chamber 20) by heating the reactor 2 in the heating furnace.

As shown in Figure 1, the methane production apparatus 1 may include a discharge pipe 11 that discharges from the reaction chamber 20, methane M produced from the feedstock gas G1 by the action of the catalyst 5, optionally together with unreacted carbon dioxide gas and/or hydrogen gas, carbon monoxide gas produced from carbon dioxide gas, and the like.

As shown in Figure 1, one end of the discharge pipe 11 is connected to the gas outlet port 23 of the reactor 2.

<Production method of methane>

Hereinafter, an embodiment of the method for producing methane from a feedstock gas containing carbon dioxide and hydrogen by using the methane production apparatus 1 will be described.

The method according to the present embodiment includes the following steps of: (a) preparing the reactor 2 including the reaction chamber 20, the pair of electrodes 3, 4 provided in the reaction chamber 20, and the catalyst 5 provided between the pair of electrodes 3, 4; (b) supplying a feedstock gas G1 containing carbon dioxide and hydrogen to the reaction chamber 20 to bring the feedstock gas G1 into contact with the catalyst 5; and (c) applying a voltage between the pair of electrodes 3, 4 in an environment with a temperature of 150°C or less so that a direct current of 1 mA or more and 10 mA or less flows through the catalyst 5.

As described above, both the electrodes 3, 4 are in contact with the catalyst 5.

As described above, the catalyst of the present invention is used as the catalyst 5.

When the catalyst 5 is one that has not yet been subjected to reduction treatment, the reduction treatment of the catalyst 5 may be carried out before the initiation of steps (b) and (c). The reduction treatment of the catalyst 5 can be carried out, for example, by supplying a reduction gas containing hydrogen gas to the reaction chamber 20 in an environment with a temperature of 200°C or more and 500°C or less to bring the reduction gas into contact with the catalyst 5. The time for bringing the reduction gas into contact with the catalyst 5 is, for example, 0.5 hours or more and 12 hours or less. The reduction gas may contain a dilution gas in addition to hydrogen gas. Examples of the dilution gas include an inert gas such as argon gas. The contents of hydrogen gas and the dilution gas in the reduction gas can be appropriately adjusted. The content of hydrogen gas in the reduction gas is, for example, 3% by volume or more and 100% by volume or less based on the volume of the reduction gas. The content of the dilution gas in the reduction gas is, for example, 0% by volume or more and 97% by volume or less based on the volume of the reduction gas.

Step (b) can be carried out by using the feedstock gas supply means 9. Specifically, the feedstock gas G1 containing carbon dioxide gas, hydrogen gas, and optionally the dilution gas can be prepared by supplying carbon dioxide gas from the carbon dioxide gas supply source 92 to the supply pipe 91, supplying hydrogen gas from the hydrogen gas supply source 93 to the supply pipe 91, and optionally supplying the dilution gas from the dilution gas supply source 94, and the prepared feedstock gas G1 can be supplied to the reaction chamber 20 through the gas inlet port 22 of the reactor 2. Upon passing through the catalyst 5, the feedstock gas G1 supplied to the reaction chamber 20 comes into contact with the catalyst 5.

In step (b), the feedstock gas G1 is preferably continuously supplied to the reaction chamber 20. The feedstock gas G1 continuously supplied to the reaction chamber 20 continuously passes through the catalyst 5 and continuously comes into contact with the catalyst 5. The time for continuously supplying the feedstock gas G1 to the reaction chamber 20 is, for example, 3 minutes or more.

The contents of carbon dioxide gas, hydrogen gas, and the dilution gas in the feedstock gas G1 can be appropriately adjusted. The content of carbon dioxide gas in the feedstock gas G1 is, for example, 10% by volume or more and 80% by volume or less, based on the volume of the feedstock gas G1. The content of hydrogen gas in the feedstock gas G1 is, for example, 20% by volume or more and 90% by volume or less, based on the volume of the feedstock gas G1. The content of the dilution gas in the feedstock gas G1 is, for example, 0% by volume or more and 50% by volume or less, based on the volume of the feedstock gas G1.

The amount of the feedstock gas G1 supplied to the reaction chamber 20 can be appropriately adjusted according to the volume of the reaction chamber 20, and the like. When the reactor body 21 has an internal diameter of 4 mm or more and 100 mm or less and a length of 150 mm or more and 1000 mm or less, the amount of the feedstock gas G1 supplied to the reaction chamber 20 is, for example, 20 mL/min or more and 5000 mL/min.

The pressure in the reaction chamber 20 after supplying the feedstock gas G1 can be appropriately adjusted. The pressure in the reaction chamber 20 after supplying the feedstock gas G1 is, for example, 0.1 MPa or more and 10 MPa or less.

The step (c) can be carried out using the temperature control means 10, the voltage application means 7, and optionally the voltage control means 8. Specifically, the temperature of the environment where the catalyst 5 is positioned (the ambient temperature around the catalyst 5, that is, the atmospheric temperature in the reaction chamber 20) can be adjusted to 150°C or less by using the temperature control means 10. In addition, by using the voltage application means 7 and optionally the voltage control means 8, a voltage can be applied between the electrodes 3, 4 so that a direct current of 1 mA or more and 10 mA or less flows through the catalyst 5.

The temperature of the environment where the catalyst 5 is positioned may be adjusted by adjusting the temperature of the feedstock gas G1 supplied to the reaction chamber 20, in place of or in combination of the use of the temperature control means 10. For example, the temperature of the environment where the catalyst 5 is positioned can be increased by supplying the heated feedstock gas G1 to the reaction chamber 20.

The voltage applied between the electrodes 3, 4 is not particularly limited as long as a direct current of 1 mA or more and 10 mA or less can flow through the catalyst 5. The voltage applied between the electrodes 3, 4 can be appropriately adjusted according to the composition of the catalyst 5, and the like, and is, for example, 30 V or more and 1500 V or less.

The order of carrying out the adjustment of the temperature of the environment where the catalyst 5 is positioned and the application of a voltage between the electrodes 3, 4 is not particularly limited as long as a voltage can be applied between the electrodes 3, 4 in an environment with a temperature of 150°C or less so that a direct current of 1 mA or more and 10 mA or less flows through the catalyst 5.

In an embodiment, after the temperature of the environment where the catalyst 5 is positioned is adjusted to 150°C or less, a voltage is applied between the electrodes 3, 4 so that a direct current of 1 mA or more and 10 mA or less flows through the catalyst 5.

The order of carrying out steps (b) and (c) is not particularly limited as long as the feedstock gas G1 can come into contact with the catalyst 5 through which a direct current of 1 mA or more and 10 mA or less flows, in an environment with a temperature of 150°C or less.

In an embodiment, step (c) is initiated before the initiation of step (b). In another embodiment, step (c) is initiated simultaneously with step (b). In still another embodiment, step (c) is initiated after the initiation of step (b) and before the completion of step (b). In these embodiments, step (c) may be completed after the initiation of step (b) and before the completion of step (b), or may be completed after the completion of step (b).

In still another embodiment, step (c) is initiated after the completion of step (b).

From the viewpoint of improving the methane production rate even when the catalyst 5 is used in a low-temperature environment, step (c) is preferably initiated after the initiation of step (b), and is more preferably carried out after the supply of the feedstock gas G1 to the reaction chamber 20 has stabilized (e.g., 10 seconds to 180 seconds after the initiation of step (b)). Examples of the case where step (c) is initiated after the initiation of step (b) include a case where step (c) is initiated after the initiation of step (b) and before the completion of step (b), and a case where step (c) is initiated after the completion of step (b), and the case where step (c) is initiated after the initiation of step (b) and before the completion of step (b) is preferred.

From the viewpoint of improving the methane production rate even when the catalyst 5 is used in a low-temperature environment, in step (c), a voltage is preferably continuously applied between the electrodes 3, 4 in an environment with a temperature of 150°C or less so that a direct current of 1 mA or more and 10 mA or less continuously flows through the catalyst 5. The time during which a direct current of 1 mA or more and 10 mA or less continuously flows through the catalyst 5 is, for example, 3 minutes or more.

In an embodiment, while continuously supplying the feedstock gas G1 to the reaction chamber 20 to continuously bring the feedstock gas G1 into contact with the catalyst 5, a voltage is continuously applied between the electrodes 3, 4 in an environment with a temperature of 150°C or less so that a direct current of 1 mA or more and 10 mA or less continuously flows through the catalyst 5.

When in an environment with a temperature of 150°C or less, the feedstock gas G1 comes into contact with the catalyst 5 through which a direct current of 1 mA or more and 10 mA or less flows, the methanation reaction ($CO_2 + 4H_2 ->$ $CH_4 + 2H_2O$) of carbon dioxide progresses by the action of the catalyst 5, so that methane is produced from the feedstock gas G1. The mechanism is as described above.

In step (c), the temperature of the environment where the catalyst 5 is positioned is not particularly limited as long as it is 150°C or less. Typically, as the temperature of the environment where the catalyst 5 is positioned is increased, the methane production rate is improved. However, according to the method of the present invention, a sufficient methane production rate can be achieved even when the temperature of the environment where the catalyst 5 is positioned is low. Thus, the effect of the method of the present invention is significant when the temperature of the environment where the catalyst 5 is positioned is low. Specifically, the effect of the method of the present invention is exerted even when the temperature of the environment where the catalyst 5 is positioned is 150°C or less, 100°C or less, 80°C or less, or 70°C or less. The lower limit of the temperature of the environment where the catalyst 5 is positioned is, for example, 10°C. This lower limit may be combined with any of the aforementioned upper limits.

In step (c), the direct current that flows through the catalyst 5 is not particularly limited as long as it is 1 mA or more and 10 mA or less. From the viewpoint of improving the methane production rate even when the catalyst 5 is used in a low-temperature environment, the direct current that flows through the catalyst 5 is preferably 3 mA or more and 10 mA or less, and more preferably 3 mA or more and 7 mA or less.

The methane M produced from the feedstock gas G1 by the action of the catalyst 5 is discharged from the reaction chamber 20 through the gas outlet port 23 of the reactor 2, optionally together with unreacted carbon dioxide gas and/or hydrogen gas, carbon monoxide gas produced from carbon dioxide gas, and the like. The methane M discharged from the reaction chamber 20 can be recovered through the discharge pipe 11.

As described above, the present invention relates to the method for producing methane from a feedstock gas containing carbon dioxide gas and hydrogen gas, and the catalyst for carbon dioxide methanation. These techniques can be used as a method for hydrodeoxygenation, such as a method for producing carbon monoxide from carbon dioxide gas and hydrogen gas, a method for producing methane from carbon monoxide gas and hydrogen gas, or a method for synthesizing methanol from carbon dioxide gas, and as a catalytic material therefor.

**Examples**

<Examples 1 to 6 and Comparative Example 1>

Examples 1 to 6 and Comparative Example 1 were conducted as follows.

(1) Preparation of catalyst

50 mL of pure water was added to $CeO_2$ powder ($CeO_2$ content: 99% by mass or more) in an amount shown in Table 1, and the mixture was stirred to obtain a $CeO_2$ powder suspension.

A Ni salt was dissolved in 50 mL of pure water to obtain an aqueous Ni salt solution. In Examples 1 to 5 and Comparative Example 1, nickel(II) acetate ($Ni(CH_3COO)_2$) was used as the Ni salt. In Example 6, nickel(II) nitrate ($Ni(NO_3)_2$)) was used as the Ni salt. The aqueous Ni salt solution was added dropwise to the $CeO_2$ powder suspension and mixed, and the mixture was evaporated to dryness at 120°C, whereby Ni element was supported on the $CeO_2$ powder. The dried product was recovered, pulverized in a mortar, and then calcined in an air atmosphere at 400°C for 3 hours to obtain a catalyst powder.

0.1 g of the catalyst powder was subjected to alkali fusion, which was dissolved in hydrochloric acid after alkali fusion, and diluted with pure water to obtain a sample for measurement in a predetermined volume. The content of Ni element in terms of metal in the sample for measurement was measured with an inductively coupled plasma (ICP) atomic emission spectrometer (PS3520UVDD manufactured by Hitachi High-Tech Corporation) and the Ni content in the catalyst powder was determined. The Ni content in the catalyst powder was determined by the formula: (the mass of Ni element in the catalyst powder in terms of metal) / (the mass of the catalyst powder) $\times$ 100. The results are shown in Table 1.

(2) Measurement of specific surface area

The specific surface area of the catalyst powder was measured. The results are shown in Table 1.

The specific surface area was measured using BELSORP-mini II manufactured by MicrotracBEL Corp. by a BET multipoint method (JIS Z 8830: 2013) using an adsorption/desorption isotherm automatic measurement program with nitrogen gas. The amount of the powder measured was about 0.05 to 0.1 g, and the pre-degassing was conducted under atmospheric pressure at 120°C for 3 hours.

(3) Raman spectroscopy measurement (Conduct of Raman spectroscopy)

The catalyst powder was fixed on a glass plate and subjected to Raman spectroscopy to obtain a Raman spectrum.

Raman spectroscopy was conducted under the following conditions: apparatus: NRS-4500 manufactured by JASCO Corporation, laser wavelength: 532.2 nm, measurement time: 15 seconds, cumulative number: 10 times, wavelength range: 50 $cm^{-1}$ to 4000 $cm^{-1}$ (analytical range: 50 $cm^{-1}$ to 1000 $cm^{-1}$), resolution: 14.4 $cm^{-1}$, and laser intensity: 5%.

In the obtained Raman spectrum, a peak intensity at a peak top present in a range of 400 $cm^{-1}$ to 500 $cm^{-1}$ was defined as P1, a peak intensity at a position of 600 $cm^{-1}$ was defined as P2, and the ratio of the peak intensity P2 to the peak intensity P1, (P2/P1) was determined. Each of the peak intensities P1 and P2 was determined by taking a peak intensity at a position of 1000 $cm^{-1}$ as a baseline, and subtracting the peak intensity at the position of 1000 $cm^{-1}$ from the measured peak intensity value. The results are shown in Table 1.

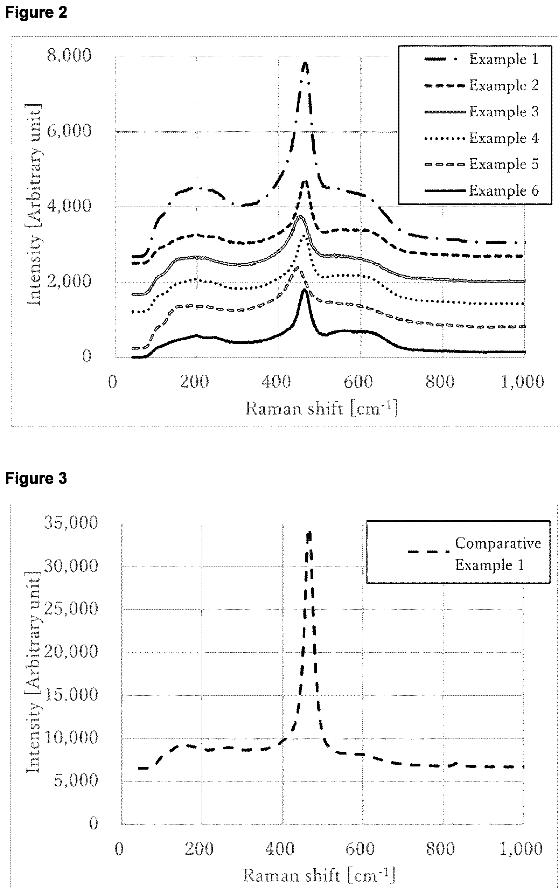

The Raman spectra obtained using the catalyst powders of Examples 1 to 6 are shown in Figure 2, and the Raman spectrum obtained using the catalyst powder of Comparative Example 1 is shown in Figure 3. Figures 2 and 3 show the Raman spectra in the range of 50 $cm^{-1}$ to 1000 $cm^{-1}$, which is a subset of the measured wavelength range of 50 $cm^{-1}$ to 4000 $cm^{-1}$.

[Table 1]

Table 1

| | Raw material | | Catalyst powder (after Ni loading) | | | | |
|---|---|---|---|---|---|---|---|
| | CeO$_2$ powder | Ni salt | Ni content | Specific surface area | Peak intensity P1 | Peak intensity P2 | P2/P1 |
| Unit | 9 | | % by mass | m$^2$/g | | | |
| Example 1 | 12.0 | Nickel acetate | 1.0 | 127 | 4765 | 1300 | 0.273 |
| Example 2 | 11.0 | | 3.0 | 123 | 2021 | 699 | 0.346 |
| Example 3 | 11.0 | | 4.8 | 117 | 1718 | 627 | 0.365 |
| Example 4 | 11.0 | | 6.8 | 118 | 1831 | 762 | 0.416 |
| Example 5 | 12.0 | | 14.0 | 102 | 1585 | 580 | 0.366 |
| Example 6 | 11.0 | Nickel nitrate | 5.0 | 105 | 1667 | 553 | 0.332 |
| Comparative Example 1 | 12.0 | Nickel acetate | 0.5 | 135 | 27782 | 1438 | 0.052 |

<Test Example 1>

The activities of the catalyst powders of Examples 1 to 6 and Comparative Example 1 were evaluated. The evaluation was carried out using an atmospheric pressure fixed-bed flow reactor. The configuration of the reactor used was the same as the reactor shown in Figure 1. As the reactor body, a quartz pipe having an internal diameter of 6.0 mm and outer diameter of 8.0 mm was used.

100 mg of each catalyst powder was filled approximately at the center in the longitudinal direction of the reactor body to form a catalyst layer (thickness: about 2.5 mm) extending in a direction approximately perpendicular to the longitudinal direction of the reactor body. The upper surface of the catalyst layer faced the gas inlet port side of the reactor, and the lower surface of the catalyst layer faced the gas outlet port side of the reactor. To apply an electric field, electrodes SUS304 made of stainless steel (having an outer diameter of 2 mm) were respectively inserted into the upper surface and the lower surface of the catalyst layer. The electrode inserted into the upper surface of the catalyst layer was electrically connected to a high-voltage power supply (high-voltage power supply HAR-30N40 manufactured by Matsusada Precision Inc.), and the electrode inserted into the lower surface of the catalyst layer was grounded.

The catalyst layer was subjected to reduction treatment before carrying out the reaction. Specifically, the catalyst layer was subjected to reduction treatment at 500°C for 1 hour by supplying gas of $H_2$:Ar = 1:3 (volume ratio) to the catalyst layer at a flow rate of 100 mL/min. By the reduction treatment, NiO in the catalyst layer is reduced to Ni metal. "Ar" means argon (the same applies hereafter).

After the reduction treatment of the catalyst layer, the temperature of the environment where the catalyst layer was positioned (the ambient temperature around the catalyst layer, that is, the atmospheric temperature in the reaction chamber) was adjusted to 70°C or 150°C by using a temperature control means (a heating furnace at 70°C or 150°C).

After adjusting the ambient temperature around the catalyst layer, feedstock gas of $H_2$:$CO_2$:Ar = 4:1:5 (volume ratio) was continuously supplied from the gas inlet port of the reactor at a flow rate of 100 mL/min to the reaction chamber in the reactor. The purity of each gas used was 99.99% or more.

After the supply of the feedstock gas to the reaction chamber had stabilized (30 seconds after the initiation of the supply of the feedstock gas), a voltage was continuously applied to two electrodes inserted into the upper surface and the lower surface of the catalyst layer by using the high-voltage power supply in a constant current (CC) mode, so that a direct current of 5 mA was continuously applied to the catalyst layer. The response voltage was measured using an oscilloscope (TDS 2001C, Tektronics Inc.).

Upon passing through the catalyst layer, the feedstock gas supplied to the reaction chamber came into contact with the catalyst layer, resulting in the production of $CH_4$ from $H_2$ and $CO_2$ in the feedstock gas by the action of the catalyst layer. The produced methane flowed was discharged from the gas outlet port of the reactor, together with unreacted $CO_2$ and/or $H_2$, CO produced from $CO_2$, and the like.

The gas discharged from the gas outlet port of the reactor was allowed to pass through an ice-water trap to remove water, and then sampled. $CH_4$, $CO_2$, and CO in 0.1 mL of the sampled gas were analyzed. Sampling of the gas was carried out three times every 10 minutes, after 10 minutes from the initiation of voltage application to two electrodes inserted into the upper surface and lower surface of the catalyst layer. Average values of the analysis data for $CH_4$, $CO_2$, and CO in the gas obtained from three times sampling were employed as the analysis data for $CH_4$, $CO_2$, and CO, respectively.

The analysis of $CH_4$, $CO_2$, and CO was carried out using a gas chromatography-flame ionization detector (GC-FID) (GC-14B manufactured by SHIMADZU CORPORATION). Specifically, $CH_4$, $CO_2$, and CO in the gas were separated using Porapak N manufactured by Markes International Ltd. as a column, $CO_2$ and CO were then sequentially converted to $CH_4$ using a metanizer (Ru/$Al_2O_3$ catalyst), and $CH_4$, $CO_2$, and CO were quantified by GC-FID measurement.

The $CO_2$ conversion rate (%), the $CH_4$ selectivity (%), the $CH_4$ production rate (%), and the material balance were calculated using the following equations. The results when the ambient temperature around the catalyst layer was adjusted to 70°C by using the temperature control means (heating furnace at 70°C) are shown in Table 2, and the results when the ambient temperature around the catalyst layer was adjusted to 150°C by using the temperature control means (heating furnace at 150°C) are shown in Table 3.

The term "$CO_2$ conversion rate" refers to the total proportion (%) of $CO_2$ converted to CO and $CO_2$ converted to $CH_4$, relative to total $CO_2$, and the term "$CH_4$ selectivity" refers to the proportion (%) of $CO_2$ converted to $CH_4$, relative to the sum of $CO_2$ converted to CO and $CO_2$ converted to $CH_4$. The term "F_ $CO_2$, in" refers to the supply speed of $CO_2$, the term "F_CO, out" refers to the production speed of CO, and the term "F_ $CH_4$, out" refers to the production speed of $CH_4$.

$$CO_2 \text{ conversion rate (\%)} = ((F\_CO, out) + (F\_CH_4, out)) / (F\_CO_2, in) \times 100$$

$$CH_4 \text{ selectivity (\%)} = (F\_CH_4, out) / ((F\_CH_4, out) + (F\_CO, out)) \times 100$$

$$CH_4 \text{ production rate (\%)} = CO_2 \text{ conversion rate (\%)} \times CH_4 \text{ selectivity (\%)}$$

Material balance = (Total molar amount of components ($CH_4$, CO, and $CO_2$) in the outlet gas) / (Molar amount of $CO_2$ in the inlet gas) $\times$ 100

As for the material balance, the value calculated in each test was close to 100%, and only $CH_4$, $CO_2$, and CO were detected as the components in the sampled gas. Therefore, it is considered that almost no carbon deposition occurred.

[Table 2]

Table 2

| | Ambient temperature around catalyst layer: 70°C | | | |
|---|---|---|---|---|
| | Response voltage (V) | $CO_2$ conversion rate (%) | $CH_4$ selectivity (%) | $CH_4$ production rate (%) |
| Example 1 | 196 | 7.43 | 70.7 | 5.3 |
| Example 2 | 201 | 7.91 | 72.7 | 5.8 |
| Example 3 | 182 | 9.43 | 74.8 | 7.1 |
| Example 4 | 173 | 12.0 | 100 | 12.0 |
| Example 5 | 179 | 12.8 | 83.3 | 10.7 |
| Example 6 | 150 | 7.1 | 84.9 | 6.0 |
| Comparative Example 1 | 182 | 7.55 | 45.9 | 3.5 |

[Table 3]

Table 3

| | Ambient temperature around catalyst layer: 150°C | | | |
|---|---|---|---|---|
| | Response voltage (V) | $CO_2$ conversion rate (%) | $CH_4$ selectivity (%) | $CH_4$ production rate (%) |
| Example 1 | 144 | 9.01 | 79.1 | 7.1 |
| Example 2 | 130 | 13.2 | 97.7 | 12.9 |
| Example 3 | 122 | 24.6 | 99.1 | 24.4 |
| Example 4 | 141 | 31.2 | 100 | 31.2 |
| Example 5 | 121 | 18.9 | 95.2 | 18.0 |
| Example 6 | 119 | 14.2 | 97.4 | 13.8 |
| Comparative Example 1 | 177 | 8.59 | 55.6 | 4.8 |

<Test Example 2>

The activities of the catalyst powders of Examples 3 and 6 were evaluated in the same manner as in Test Example 1, except that the reduction treatment of the catalyst layer was not carried out before carrying out the reaction. The results when the ambient temperature around the catalyst layer was adjusted to 70°C by using the temperature control means (heating furnace at 70°C) are shown in Table 4, and the results when the ambient temperature around the catalyst layer was adjusted to 150°C by using the temperature control means (heating furnace at 150°C) are shown in Table 5.

[Table 4]

Table 4

| | Ambient temperature around catalyst layer: 70°C | | | |
|---|---|---|---|---|
| | Response voltage (V) | $CO_2$ conversion rate (%) | $CH_4$ selectivity (%) | $CH_4$ production rate (%) |
| Example 3 | 206 | 10.3 | 97.3 | 10.0 |

(continued)

| | Ambient temperature around catalyst layer: 70°C | | | |
| --- | --- | --- | --- | --- |
| | Response voltage (V) | $CO_2$ conversion rate (%) | $CH_4$ selectivity (%) | $CH_4$ production rate (%) |
| Example 6 | 169 | 9.8 | 96.7 | 9.5 |

[Table 5]

Table 5

| | Ambient temperature around catalyst layer: 150°C | | | |
| --- | --- | --- | --- | --- |
| | Response voltage (V) | $CO_2$ conversion rate (%) | $CH_4$ selectivity (%) | $CH_4$ production rate (%) |
| Example 3 | 181 | 12.6 | 98.9 | 12.5 |
| Example 6 | 134 | 10.1 | 89.8 | 9.1 |

**Description of Reference Signs**

1    Methane production apparatus
2    Reactor
20    Reaction chamber
21    Reactor body
22    Gas inlet port
23    Gas outlet port
3    Electrode (voltage applying side)
4    Electrode (grounding side)
5    Catalyst
6    Support means
7    Voltage application means
8    Voltage control means
9    Raw material gas supply means
91    Supplying pipe
92    Carbon dioxide gas supply source
93    Hydrogen gas supply source
94    Dilution gas supply source
10    Temperature control means
11    Discharge pipe
G1    Feedstock gas
G2    Carbon dioxide gas
G3    Hydrogen gas
G4    Dilution gas

**Claims**

1.  A method for producing methane from a feedstock gas containing carbon dioxide gas and hydrogen gas, the method comprising the following steps of:

    (a) preparing a reactor comprising a reaction chamber, a pair of electrodes provided in the reaction chamber, and a catalyst provided between the pair of electrodes;
    (b) supplying the feedstock gas containing carbon dioxide gas and hydrogen gas to the reaction chamber to bring the feedstock gas into contact with the catalyst; and
    (c) applying a voltage between the pair of electrodes in an environment with a temperature of 150°C or less so that a direct current of 1 mA or more and 10 mA or less flows through the catalyst,

wherein the pair of electrodes are both in contact with the catalyst,
wherein the catalyst comprises a carrier and a catalytically active component supported on the carrier,
wherein the carrier comprises cerium oxide, and
wherein the catalytically active component comprises nickel element.

2. The method as claimed in claim 1, wherein step (c) is carried out in an environment with a temperature of 100°C or less.

3. The method as claimed in claim 1 or 2, wherein the catalytically active component comprises one or more selected from metallic nickel and nickel oxide.

4. The method as claimed in claim 1 or 2, wherein step (c) is initiated after initiation of step (b).

5. The method as claimed in claim 1 or 2, wherein in step (b), the feedstock gas is continuously supplied to the reaction chamber.

6. The method as claimed in claim 1 or 2, wherein in step (c), a voltage is continuously applied between the pair of electrodes so that the direct current of 1 mA or more and 10 mA or less continuously flows through the catalyst.

7. A catalyst for carbon dioxide methanation, the catalyst comprising a carrier and a catalytically active component supported on the carrier,

wherein the carrier comprises cerium oxide,
wherein the catalytically active component comprises nickel element, and
wherein when, in a Raman spectrum obtained by Raman spectroscopy measurement of the catalyst, a peak intensity at a peak top present in a range of 400 $cm^{-1}$ to 500 $cm^{-1}$ is defined as P1 and a peak intensity at a position of 600 $cm^{-1}$ is defined as P2, P2/P1 is 0.15 or more and 0.60 or less.

8. The catalyst as claimed in claim 7, wherein a content of nickel element in the catalyst is 0.8% by mass or more and 20% by mass or less.

9. The catalyst as claimed in claim 7 or 8, wherein the catalytically active component comprises one or more selected from metallic nickel and nickel oxide.

10. The catalyst as claimed in claim 7 or 8, wherein a specific surface area of the catalyst is 200 $m^2/g$ or less.

**Figure 1**

**Figure 2**

**Figure 3**

## INTERNATIONAL SEARCH REPORT

| International application No. |
|---|
| **PCT/JP2024/006956** |

### A.   CLASSIFICATION OF SUBJECT MATTER

*C07C 1/12*(2006.01)i; *B01J 23/83*(2006.01)i; *C07B 61/00*(2006.01)i; *C07C 9/04*(2006.01)i; *C25B 3/03*(2021.01)i; *C25B 9/00*(2021.01)i

FI:   C07C1/12 ZAB; C07B61/00 300; C07C9/04; B01J23/83 Z; C25B3/03; C25B9/00 G

According to International Patent Classification (IPC) or to both national classification and IPC

### B.   FIELDS SEARCHED

Minimum documentation searched (classification system followed by classification symbols)

C07C1/12; B01J23/83; C07B61/00; C07C9/04; C25B3/03; C25B9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C.   DOCUMENTS CONSIDERED TO BE RELEVANT

| Category* | Citation of document, with indication, where appropriate, of the relevant passages | Relevant to claim No. |
|---|---|---|
| Y | 片山優希 ほか, 電場触媒反応によるCO2メタネーションの低温化, 公益社団法人 石油学会 函館大会(第51回石油・石油化学討論会)予稿集, 2021, (KATAYAMA, Yuki et al., Low temperature CO2 methanation in an electric field), non-official translation (Proceedings of the Japan Petroleum Institute, Hakodate Conv. of JPI (51st Petroleum-Petrochemical Symposium of JPI)) particularly, 2.実験, 3.結果および考察, non-official translation (2. Experiment, 3. Results and discussion) | 1-6 |
| A | | 7-10 |
| Y | JP 2020-032331 A (KABUSHIKI KAISHA TOYOTA CHUO KENKYUSHO) 05 March 2020 (2020-03-05) paragraph [0002] | 1-6 |
| X | example 1, paragraph [0067] | 7-10 |

☑ Further documents are listed in the continuation of Box C.        ☑ See patent family annex.

| | |
|---|---|
| *       Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **09 May 2024** | **21 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
| --- |
| **PCT/JP2024/006956** |

**C.      DOCUMENTS CONSIDERED TO BE RELEVANT**

| Category* | Citation of document, with indication, where appropriate, of the relevant passages | Relevant to claim No. |
| --- | --- | --- |
| Y | JP 2020-033280 A (NATIONAL UNIV. CORP. SHIZUOKA UNIV.) 05 March 2020 (2020-03-05) | 1-6 |
| | claim 1 | |
| X | examples, paragraph [0038] | 7-10 |
| X | CN 113351211 A (NANCHANG UNIVERSITY) 07 September 2021 (2021-09-07) | 7-10 |
| | claim 1, examples | |
| A | | 1-6 |
| A | EP 3050865 A1 (FUNDACIO INSTITUT RECERCA EN ENERGIA DE CATALUNYA) 03 August 2016 (2016-08-03) | 1-10 |
| A | JP 2020-093248 A (NATIONAL INSTITUTE FOR MATERIALS SCIENCE) 18 June 2020 (2020-06-18) | 1-10 |
| A | CN 111974402 A (TIANJIN UNIVERSITY) 24 November 2020 (2020-11-24) | 7-10 |
| P. A | 岩崎花 ほか, ナノ結晶CeO2担持触媒を用いた電場印加反応場による低温域でのCO2 メタネーション, 公益社団法人石油学会 大阪大会(第53回石油・石油化学討論会)予稿集, 26 December 2023, (IWASAKI, Hana et al., CO2 Methanation at Low Temperature by Electric Field Applied Reaction Field with Nanocrystalline CeO2-supported Catalysts), non-official translation (Proceeding of the Japan Petroleum Institute, Osaka Conv. of JPI (53rd Petroleum-Petrochemical Symposium of JPI)) | 1-10 |

Form PCT/ISA/210 (second sheet) (July 2022)

**INTERNATIONAL SEARCH REPORT**
Information on patent family members

International application No.

**PCT/JP2024/006956**

| Patent document cited in search report | | | Publication date (day/month/year) | Patent family member(s) | Publication date (day/month/year) |
|---|---|---|---|---|---|
| JP | 2020-032331 | A | 05 March 2020 | (Family: none) | |
| JP | 2020-033280 | A | 05 March 2020 | (Family: none) | |
| CN | 113351211 | A | 07 September 2021 | (Family: none) | |
| EP | 3050865 | A1 | 03 August 2016 | (Family: none) | |
| JP | 2020-093248 | A | 18 June 2020 | (Family: none) | |
| CN | 111974402 | A | 24 November 2020 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018161617 A